# EUROPÄISCHE PATENTANMELDUNG

(11) **EP 0 829 326 A1**
(43) Veröffentlichungstag der Anmeldung: **18.03.1998**
(21) Anmeldenummer: 97114264.1
(22) Anmeldetag: 19.08.1997
(51) Int. Cl.: B23P 23/02, B23B 3/06

(54) **Verfahren und Vorrichtung zur Herstellung von Rotationskörpern**

(30) Priorität: 10.09.1996 DE 19636772
(71) Anmelder: Scherer Feinbau GmbH, 63776 Mömbris (DE)
(72) Erfinder: Pötsch, Detlef, Dipl.-Ing., 63743 Aschaffenburg (DE)
(74) Vertreter: Pöhner, Wilfried Anton, Dr.

(57) **Zusammenfassung**

Vorgeschlagen wird ein Verfahren zur Herstellung von Rotationskörpern, insbesondere Ventilstößeln mit Stirnflächen großer Härte, durch ein spanendes Werkzeug, welches eine Werkstückhalterung aufweist, in die das Werkstück eingespannt ist und mit der es von einem Spindelantrieb um seine Achse drehbar ist, wobei die Werkstückhalterung parallel der Drehachse verschiebbar ist, wobei das Werkstück (1) in Rotation um seine Rotationsachse (5) versetzt wird, das Werkzeug ein Fräswerkzeug (2) ist, welches raumfest rotiert, und die Stirnfläche (10) parallel der Drehachse (8) des Werkstücks (1) relativ zum Fräswerkzeug (2) bewegt wird. Ferner wird eine Vorrichtung zur Durchführung des Verfahrens beschrieben.

## Beschreibung

Die Erfindung betrifft ein Verfahren zur Herstellung von Rotationskörpern, insbesondere Ventilstößeln mit Stirnflächen großer Härte, durch ein spanendes Werkzeug, welches eine Werkstückhalterung aufweist, in die das Werkstück eingespannt ist und mit der es von einem Spindelantrieb um seine Achse drehbar ist, wobei die Werkstückhalterung parallel der Drehachse verschiebbar ist, sowie eine Vorrichtung zur Durchführung des Verfahrens.

Rotationskörper werden in der Regel durch einen Drehvorgang aus einem Rohling hergestellt und weisen daher rotationssymmetrische Außenflächen auf. Hat die Stirnfläche des Körpers eine im Vergleich zur Mantelfläche größere Härte, wie es insbesondere bei Ventilstößeln der Fall ist, so erfordert die Formgebung der Stirnfläche einen erhöhten Aufwand. Anstelle ebener Stirnflächen ist dabei häufig die Fertigung einer konvexen oder konkaven Flächenkrümmung erwünscht.

Zur Herstellung von Ventilstößeln findet ein Drehvorgang lediglich bei der Mantelfläche Anwendung. Zu diesem Zweck sind Drehvorrichtungen mit einer Werkstückhalterung gebräuchlich, in welche das Werkstück eingespannt wird und in denen es mit einem Spindelantrieb um seine Achse drehbar ist.

Durch Bewegung eines starren Drehwerkzeuges entlang der rotierende Oberfläche wird die Gestalt des Werkstücks aus dem Rohling herausgearbeitet.

Für die Fertigung der Stirnfläche ist ein Drehvorgang jedoch ungeeignet: Bei konstanter Winkelgeschwindigkeit des Werkstückes ist die Relativgeschwindigkeit des Drehwerkzeuges zur Materialoberfläche proportional dem Abstand zur Drehachse und geht mit zunehmender Annäherung gegen Null. Wird das Drehwerkzeug im Bereich des äußeren Randes auf die Stirnfläche aufgesetzt und auf ihr Zentrum zu bewegt, erfolgt der Abtrag des Materials in zunehmendem Maße mit der achsennahen Werkzeugkante, die folglich in hohem Maße beansprucht ist. Bei sehr harten Materialien, etwa der Stirnfläche eines Ventilstößels, führen die hohen ausgeübten Kräfte zur raschen Zerstörung des Werkzeuges, so daß sich diese Vorgehensweise aufgrund zu geringer Standzeiten als unzweckmäßig erwiesen hat.

Im Stande der Technik wird die Stirnfläche der Ventilstößel daher geschliffen, wobei im allgemeinen die Arbeitsgänge des Vor- und Fertigschleifens erforderlich sind. Neben der Zahl der Arbeitsgänge erweist es sich als nachteilig, daß der Schleifvorgang aufgrund der großen Härte des Materials einen langen Zeitraum beansprucht, denn die typische Rockwellhärte von Ventilstirnflächen beträgt HRC > 60. Zudem erfordert die Anschaffung von Schleifmaschinen hohe Investitionskosten.

Vor diesem Hintergrund hat es sich die Erfindung zur Aufgabe gestellt, ein Verfahren zu entwickeln, mit dem sich die Stirnflächen von Rotationskörpern auch bei großer Härte auf rasche und preiswerte Weise bearbeiten lassen sowie eine dazu geeignete Vorrichtung anzugeben.

Diese Aufgabe wird erfindungsgemäß dadurch gelöst, daß das Werkstück in Rotation um seine Rotationsachse versetzt wird, das Werkzeug ein Fräswerkzeug ist, welches raumfest rotiert, und die Stirnfläche parallel der Drehachse des Werkstücks relativ zum Fräswerkzeug bewegt wird.

Die grundlegende Idee des vorgeschlagenen Verfahrens beruht darauf, die Bearbeitung mit einem Fräswerkzeug vorzunehmen, welches eine Werkstückhalterung aufweist, wie sie bei einer Drehmaschine üblich ist. Insbesondere ist die Halterung, die beispielsweise von einem Spannfutter mit Spannbacken gebildet wird, auf einer Spindel befestigt, welche sich mit einem Antrieb in Rotation versetzen läßt. Weiterhin ist das Werkstück in Richtung seiner Drehachse relativ zum Fräswerkzeug beweglich, welches sich raumfest um seine Rotationsachse dreht. Durch Bewegung des Werkstücks in Richtung seiner Drehachse auf das Fräswerkzeug zu läßt sich die Bearbeitung seiner Stirnfläche vornehmen. Dabei erweist sich eine etwa parallele Ausrichtung von Dreh- und Rotationsachse häufig als zweckmäßig. Selbstverständlich ist auch die kinematische Umkehr des Aufbaus denkbar, d. h. eine raumfeste Drehung des Werkstücks bei in Richtung seiner Rotationsachse beweglichem Fräswerkzeug. In beiden Fällen erfolgt der Oberflächenabtrag, indem das Fräswerkzeug in das Werkstück eindringt.

Der Vorteil des erfindungsgemäßen Verfahrens besteht in einer wesentlichen Verkürzung der Bearbeitungsdauer der Werkstücke. In der Regel ist lediglich ein Arbeitsgang erforderlich, sofern nicht die Notwendigkeit sehr geringer Fertigungstoleranzen besteht oder Beschädigungen der Stirnfläche beim Einspannen zur Bearbeitung der Mantelfläche auftreten können; in diesen Fällen sind zwei Arbeitsgänge bevorzugt. Eine lokale Überbelastung des Werkzeuges mit nachfolgender Zerstörung wird dagegen vermieden, weil in Folge seiner Rotation stets eine ausreichende Relativgeschwindigkeit zur Werkstückoberfläche besteht. Dabei ist ein gegenläufiger Rotationssinn von Werkzeug und Werkstück zweckmäßig. Vorzugsweise sind zudem Rotationsachse des Werkzeuges und Drehachse des Werkstücks senkrecht zueinander versetzt. Damit läßt sich eine großflächige Verteilung der Abnutzungserscheinungen über die spanende Fläche des Werkzeugs und eine entsprechende Verlängerung seiner Standzeit erreichen.

Zur Herstellung konvex oder konkav gewölbter Stirnflächen sind zwei unterschiedliche Weiterbildungen des Verfahrens von Vorteil, die unabhängig oder in Verbindung miteinander einsetzbar sind. Die erste Möglichkeit besteht darin, daß das Werkstück senkrecht seiner Drehachse verschiebbar ist und entsprechend der herzustellenden Oberflächenkontur mit der Halterung in dieser Richtung sowie parallel zu seiner Drehachse bewegt wird. Zur Realisierung der Beweglichkeit ist ein Kreuzschlitten von Vorteil, welcher die Verschiebung parallel und senkrecht der Drehachse gestattet. Grundsätzlich ist auch die Beweglichkeit in der dazu senkrechten, dritten Raumrichtung denkbar. Die Steuerung der Bewegungen wird mittels einer geeigneten Steuerungsvorrichtung vorgenommen, welche z. B. den Raumrichtungen zugeordnete Vorschubmotoren ansteuert.

Alternativ oder ergänzend kann die Bearbeitung des Werkstücks lediglich mit einer Kante der Stirnfläche des Fräswerkzeuges vorgenommen werden. Zu diesem Zweck ist eine ringförmige Erhöhung seiner Stirnfläche von Vorteil, welche symmetrisch zur Rotationsachse ist. Abhängig vom Winkel, in dem die Rotationsachse zur Drehachse des Werkstücks eingestellt wird, entsteht entweder eine Erhöhung, eine Vertiefung oder eine plane Stirnfläche des Werkstücks, die jeweils zu seiner Drehachse rotationssymmetrisch ist. Eine Bearbeitung mit der radial innenliegenden Seite einer Erhöhung erzeugt dabei eine konvex gewölbte Stirnfläche des Werkstücks, während die Bearbeitung mit der Außenkante des Fräswerkzeuges eine Vertiefung zur Folge hat. Obwohl die Bearbeitung ausschließlich mit einem Rand oder einer Kante des Fräswerkzeuges erfolgt, ist eine geringe Abnutzung und lange Standzeit sichergestellt, da die Bearbeitung mit dem gesamten Umfang erfolgt. Entsprechend verteilen sich Abnutzungen infolge der Belastung. Ein besonderer Vorteil dieser Vorgehensweise besteht darin, daß ein vorgegebener Winkel der Achsen eine definierte Krümmung der Werkstückoberfläche in Abhängigkeit vom Radius der bearbeitenden Kante zur Folge hat. Eine Achsenverstellung während des Bearbeitungsvorgangs mit entsprechender Steurungsvorrichtung erübrigt sich daher.

Insbesondere im letzteren Fall ist es zweckmäßig, wenn der Durchmesser des Werkzeuges größer als der Durchmesser des Werkstücks ist. Auf diese Weise werden mechanische und thermische Beanspruchungen großflächig verteilt und die Abnutzung des Werkzeuges mit entsprechender Verlängerung der Standzeit reduziert. Erfolgt die Herstellung gekrümmter Stirnflächen durch Anstellung der Rotationsachse zur Drehachse, ist der maximale Werkzeugdurchmesser durch den minimalen, zu erzeugenden Krümmungsradius der Werkstückoberfläche vorgegeben.

Weiterhin wird vorgeschlagen, die Bearbeitung des Werkstücks mit vertikal ausgerichteter Drehachse vorzunehmen, so daß sich die Bestückung der Vorrichtung erleichtert und die notwendige Stellfläche reduziert. Darüber hinaus lassen sich derart die Fertigungspräzision begrenzende Durchbiegungen der Vorrichtung unter dem Einfluß der Schwerkraft minimieren.

Eine vorteilhafte Vorrichtung zur Durchführung des Verfahrens weist ein Fräswerkzeug auf, dessen Rotationsachse um eine senkrecht zu ihr verlaufende Achse kippbar ist. Die Abweichung von der senkrechten Ausrichtung dieser Achsen ist zwar prinzipiell möglich, jedoch mit dem Nachteil verbunden, daß sich die Verschiebung des Fräswerkzeugs in der Ebene senkrecht seiner Rotationsachse mit dem Kippwinkel bei zunehmender Abweichung vergrößert. Durch die Verkippbarkeit der Rotationsachse wird insbesondere die Möglichkeit eröffnet, gekrümmte Stirnflächen auf einfache Weise zu erzeugen. Im einfachsten Fall kann dabei auf eine Steuerungseinheit für die Verkippung verzichtet werden, da die Krümmung der erzeugten Werkstückoberfläche eine direkte Funktion des Kippwinkels ist.

Vorzugsweise ist das Fräswerkzeug mit einer ringförmigen, zur Rotationsachse symmetrischen Erhöhung seiner Stirnfläche versehen, deren Oberfläche spanabhebende Strukturen aufweist. Im zur Rotationsachse des Fräswerkzeuges radialen Schnitt ist die Oberseite der Erhöhung bevorzugt gerundet. Eine geeignete Gestalt ihres Querschnitts besteht beispielsweise in einem Kreis- oder Ellipsenabschnitt, d. h. die Erhöhung hat die Gestalt eines Torusabschnitts. Somit werden Kanten, welche einem besonders großen Verschleiß unterliegen, auf der Oberfläche der Erhöhung vermieden und die Standzeit des Fräswerkzeuges entsprechend vergrößert.

Weitere Einzelheiten, Merkmale und Vorteile der Erfindung lassen sich dem nachfolgenden Beschreibungsteil entnehmen, in dem ein Ausführungsbeispiel einer erfindungsgemäßen Vorrichtung anhand der Zeichnung näher erläutert ist. Es zeigen in prinzipienhafter Darstellung
- Figur 1:: Schematische Aufbau der Vorrichtung,
- Figur 2:: Prinzipskizze der Oberflächenbearbeitung.

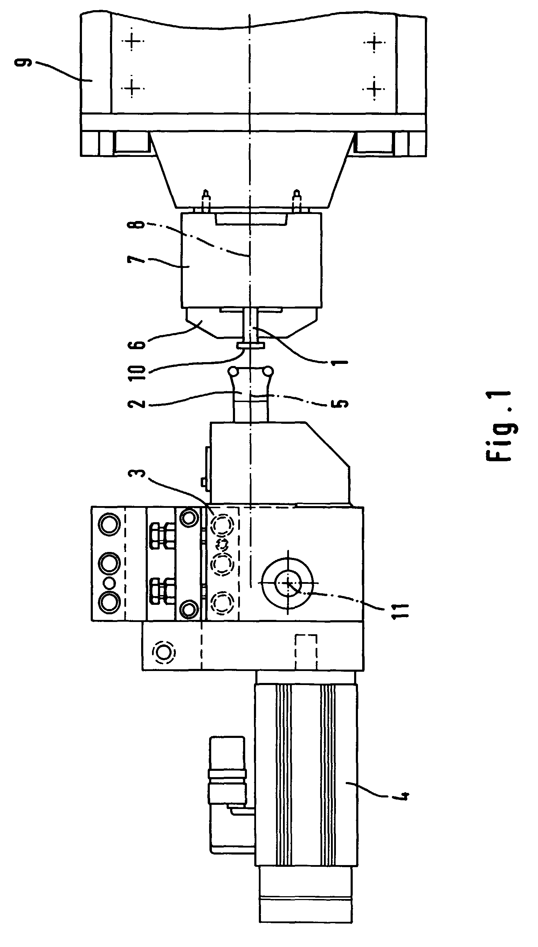

Bei der in Figur 1 wiedergegebenen Vorrichtung erfolgt die Bearbeitung des Werkstücks (1) mit einem Fräswerkzeug (2), welches in der Werkzeugaufnahme einer Fräseinheit (3) befestigt ist und vom Antrieb (4) um seine Rotationsachse (5) drehbar ist. Das Werkstück (1) ist seinerseits in einer Halterung (6) angebracht, beispielsweise den Spannbacken eines Spannfutters, welche der Spindelantrieb (7) in Rotation um die Drehachse (8) versetzt. Halterung (6) und Spindelantrieb (7) sind mit einem Kreuzschlitten (9) sowohl parallel der Drehachse (8), welche vorzugsweise vertikal ausgerichtet ist, als auch senkrecht dazu verschiebbar, so daß sich die Stirnfläche (10) des Werkstücks (1) gegen das rotierende Fräswerkzeug verfahren und mit ihm bearbeiten läßt. Dabei ist die Fräseinheit (3) um die Kippachse (11) verschwenkbar und der Winkel zwischen Rotationsachse (5) sowie Drehachse (8) somit veränderlich.

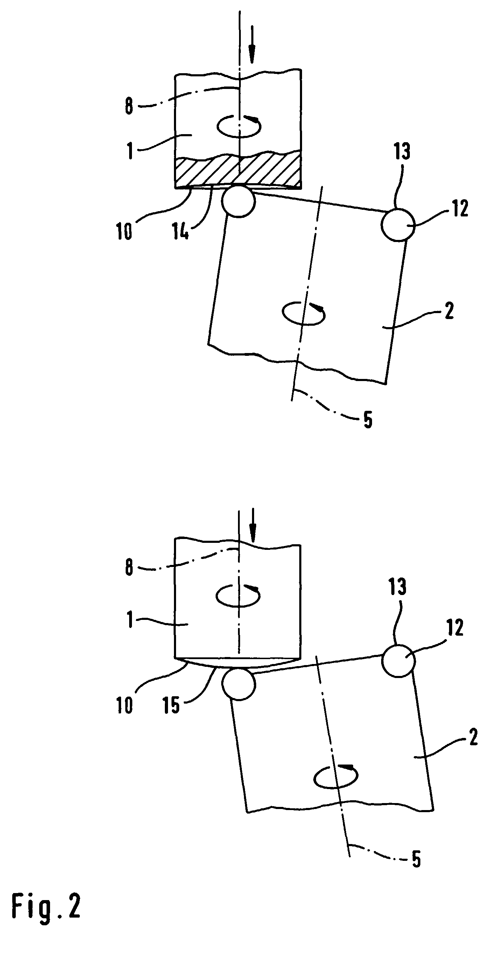

Figur 2 zeigt die Bearbeitung der Stirnfläche (10) des Werkstücks (1) mit dem Fräswerkzeug (2) in vergrößerter Darstellung. Die spanende Bearbeitung des Werkstücks (1) erfolgt ausschließlich durch eine randseitig umlaufende, ringförmige Erhöhung (12) der Stirnfläche des Fräswerkzeuges (2), dessen spanende Fläche (13) zur Reduzierung der Abnutzung gerundet ist. Vertiefungen (14) und Wölbungen (15) der Stirnfläche (10) des Werkstücks (1) lassen sich durch unterschiedliche Winkelstellungen zwischen Rotationsachse (5) und Drehachse (8) herstellen, wie im oberen und unteren Teilbild von Figur 2 dargestellt ist, wobei die parallele Ausrichtung beider Achsen (5, 8) eine ebene Stirnfläche (10) senkrecht der Drehachse (8) zur Folge hat. Mit zunehmendem Winkel nimmt der Krümmungsradius von Vertiefung (14) bzw. Wölbung (15) ab, so daß unterschiedliche Ausbildungen der Stirnfläche (10) erzeugbar sind, deren Symmetrie zur Drehachse (8) des Werkstücks durch dessen Rotation sichergestellt ist.

Im Ergebnis lassen sich die Stirnflächen eines Ventilstößels mit der beschriebenen Vorrichtung und den vorgestellten Verfahren erheblich rascher und preiswerter bearbeiten.

## Patentansprüche

1. Verfahren zur Herstellung von Rotationskörpern, insbesondere Ventilstößeln mit Stirnflächen großer Härte, durch ein spanendes Werkzeug, welches eine Werkstückhalterung aufweist, in die das Werkstück eingespannt ist und mit der es von einem Spindelantrieb um seine Achse drehbar ist, wobei die Werkstückhalterung parallel der Drehachse verschiebbar ist, **dadurch gekennzeichnet**, daß
- das Werkstück (1) in Rotation um seine Rotationsachse (5) versetzt wird,
- das Werkzeug ein Fräswerkzeug (2) ist, welches raumfest rotiert,
- und die Stirnfläche (10) parallel der Drehachse (8) des Werkstücks (1) relativ zum Fräswerkzeug (2) bewegt wird.

2. Verfahren nach Anspruch 1, **dadurch gekennzeichnet**, daß das Werkstück (1) senkrecht seiner Drehachse (8) verschiebbar ist und entsprechend der herzustellenden Oberflächenkontur mit der Halterung (6) senkrecht und parallel seiner Drehachse (8) bewegt wird.

3. Verfahren nach Anspruch 1 oder 2, **dadurch gekennzeichnet**, daß die Rotationsachse (5) des Fräswerkzeuges (2) relativ zur Drehachse (8) des Werkstücks (1) im Winkel eingestellt wird und die Bearbeitung mit einer Kante des Fräswerkzeuges (2) vorgenommen wird.

4. Verfahren nach einem der vorhergehenden Ansprüche, **dadurch gekennzeichnet**, daß der Durchmesser des Fräswerkzeuges (2) größer als der Durchmesser des Werkstücks (1) ist.

5. Verfahren nach einem der vorhergehenden Ansprüche, **dadurch gekennzeichnet**, daß die Drehachse (8) des Werkstücks (1) vertikal ausgerichtet ist.

6. Vorrichtung zur Durchführung eines Verfahrens nach einem der vorhergehenden Ansprüche, **dadurch gekennzeichnet**, daß die Rotationsachse (5) des Fräswerkzeuges (2) um eine senkrecht zu ihr verlaufende Achse (11) kippbar ist.

7. Vorrichtung nach Anspruch 6, **dadurch gekennzeichnet**, daß das Fräswerkzeug (2) mit einer ringförmigen, zur Rotationsachse (5) symmetrischen Erhöhung (12) seiner spanenden Fläche (13) versehen ist.

8. Vorrichtung nach Anspruch 6 oder 7, **dadurch gekennzeichnet**, daß die äußere Fläche (13) der Erhöhung (12) im zur Rotationsachse (5) des Fräswerkzeuges (2) radialen Querschnitt abgerundet ist.
